(19) Europäisches Patentamt
European Patent Office
Office européen des brevets

(11) **EP 2 848 514 A1**

(12) **EUROPEAN PATENT APPLICATION**

(43) Date of publication:
18.03.2015 Bulletin 2015/12

(51) Int Cl.:
***B62M 6/50*** (2010.01)

(21) Application number: **14184733.5**

(22) Date of filing: **19.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **19.05.2008 JP 2008130315**

(62) Document number(s) of the earlier application(s) in accordance with Art. 76 EPC:
**09750561.4 / 2 289 794**

(71) Applicant: **SUNSTAR GIKEN KABUSHIKI KAISHA Takatsuki-shi, Osaka 569-1134 (JP)**

(72) Inventors:
- **Yoshiie, Akihito**
  **Osaka, 569-0806 (JP)**
- **Yamaguchi, Katsuhiro**
  **Osaka, 569-0806 (JP)**

(74) Representative: **Hoffmann Eitle**
**Patent- und Rechtsanwälte PartmbB**
**Arabellastraße 30**
**81925 München (DE)**

Remarks:
This application was filed on 15-09-2014 as a divisional application to the application mentioned under INID code 62.

(54) **Electric assist bicycle**

(57) In order to provide an electric assist bicycle capable of performing a smooth electric assist traveling with a good feeling by generating an assist force having high follow-up characteristics even on an uphill road, the following control is carried out. A pedaling force $F_L$, a bicycle speed V, a crank angle θ, a start angle θs, a maximum pedaling force angle θm0, and an end angle θe0 are detected (step 350). An assist force is calculated from the pedaling force $F_L$ and the bicycle speed V (step 352), and a motor control is performed (step 354). A determination is made whether the bicycle is traveling on an uphill road based on the pedaling force $F_L$ and the crank angle θ during performing an assist action (step 356). During it is determined that the bicycle is traveling on the uphill road, a re-calculation of an uphill assist force and the motor control are carried out on the basis of the pedaling force $F_L$, the bicycle speed V, and the crank angle θ when the crank angle reaches a angle for starting applying an uphill assist force (affirmative determination at step 358) (step 360).

*Fig. 11*

## Description

TECHNICAL FIELD

The present invention relates to an electric assist bicycle that allows a person to easily enjoy travelling with a good feeling even on an uphill road.

BACKGROUND ART

Conventionally, as to an electric assist bicycle, an assist force provided from an electric motor is determined according to the product of a pedaling force detected and an assist ratio (a ratio of a supplementary output of the electric motor to the pedaling force) determined from a bicycle speed, etc.

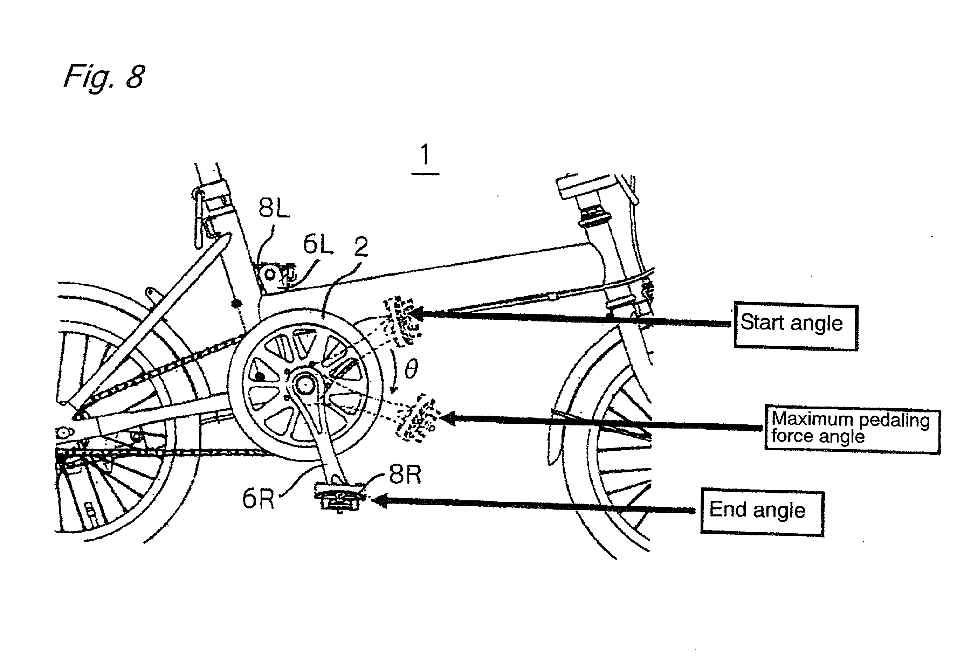

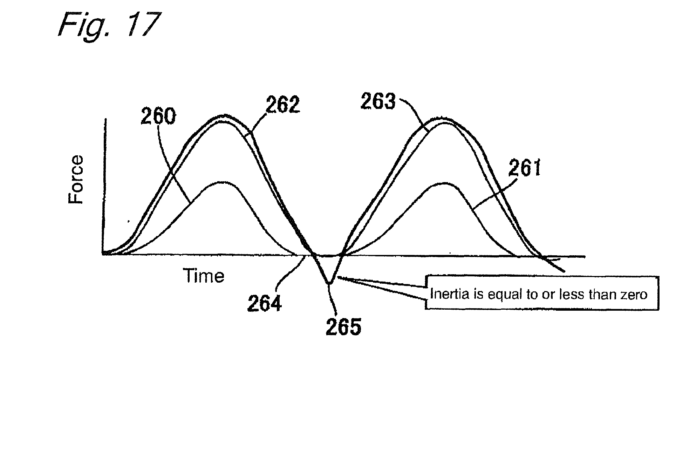

In depressing a foot pedal in real, a pedaling force starts to rise at a pedaling start angle, reaches the maximum at a maximum pedaling force angle, and returns to substantially zero at an end angle (see Fig. 8). This cycle repeats alternately with respect to left and right pedals. Accordingly, the pedaling force applied via a foot pedal changes in the form of a sine wave as shown by 260 and 261 in Fig. 17. One of the two adjacent curbs 260, 261 corresponds to a pedaling force applied via either of the left and right pedals while the other is a pedaling force applied via the other pedal. Thus, the change of an assist force proportional to the product of the pedaling force and the assist ratio is similar to the change of the pedaling force as shown by 262, 263 in Fig. 17. This means that there is a section 264 where the assist force drops between the adjacent pedaling cycles.

Despite the section 264 where the assist force drops as noted above, there is no problem in view of feeling during traveling as long as the electric assist bicycle travels on flat ground or gentle slope since some degree of inertia of the bicycle allows a rider to easily depress the next pedal.

Traveling on a steep ascending slope, however, the inertia is not kept so that the assist force may decrease to zero and moreover a torque in an opposite direction to the ascending direction may be applied due to gravity between adjacent pedaling cycles as shown by 265 in Fig. 17. This makes it difficult to travel on an uphill road and thus an essential objective of an electric assist bicycle may not be attained. Further, a feeling of travel may extremely get worse.

In order to solve the above problem, for example, patent document 1 noted below discloses the following technique about an electric assist bicycle. That is, the electric assist bicycle according to the conventional technique includes a pedal detection unit 4 for detecting a pedaling force, a control signal generation means 3 for generating and outputting a control signal during a period extended in proportion to a duration in which the pedaling force is detected by the pedal detection unit 4, and a control means 1 for applying an assist force according to the pedaling force in response to the extended control signal. This technique can control the period for applying the assist force not to affect the next pedaling cycle according to the change of its bicycle speed since the assist force is continuously applied as before in proportion to a duration of the pedaling force even when a pedal reaches the top or bottom dead center where any force is not originally applied.

In the above conventional technique, however, there may be a problem that it does not necessarily provide an assist force that exactly corresponds to a current pedal position because the period for outputting the control signal is extended in proportion to the duration of the pedaling force detected by the pedal detection unit 4.

CITATION LIST

PATENT LITERATURE

Patent document 1: Japanese Patent Application Laid-Open No. hei8-113185 (Japanese Patent No. 3389351). US2004/0206563, on which the pre-characterising portion of claim 1 is based, discloses a power assisted, manually operated vehicle.

SUMMARY OF INVENTION

The present invention has been developed in view of the above facts, and an objective of the present invention is to provide an electric assist bicycle that allows a person to easily enjoy travelling smoothly with a good feeling by generating an assist force having high follow-up characteristics even on an uphill road.

In order to solve the above problems, there is provided an electric assist bicycle according to claim 1.

According to the present invention, when it is determined that the bicycle is traveling on the uphill road, the assist control means switches from the assist force to an uphill assist force in accordance with at least the crank angle detected by the crank angle detection means and controls the electric means to output the uphill assist force. Therefore, this can provide an assist force having high follow-up characteristics according to a crank angle even on an uphill road and thus makes it possible to enjoy a smooth electric assist traveling with a good feeling.

When the uphill determination means determines that it is traveling on the uphill road, the assist control means preferably switches from the assist force to the uphill assist force while the crank angle detected by the crank angle detection means lies within a predetermined range. For example, referring to a crank angle when a pedaling starts in a pedal half-rotation cycle as a pedaling start angle, to a crank angle when the pedaling force becomes maximum as a maximum pedaling force angle, and to a crank angle when the pedaling ends as a pedaling end angle, the predetermined range of the crank angle is a first angle that lies between the maximum pedaling force angle and the pedaling end angle in a pedal half-rotation cycle to a second angle that lies between the pedaling start angle and the maximum pedaling force angle in a next pedal half-rotation cycle. Supposing, for example, that the pedaling start angle be 0°, and thus the maximum pedaling force angle and the pedaling end angle be 90° and 180°, respectively, the first angle may be decided to be an angle in a preceding pedal half-rotation cycle, e.g. 150°, and the second angle may be decided to be an angle in the next pedal half-rotation cycle, e.g. 30°.

Since the pedaling force greatly drops between the first angle at which the pedaling force is gradually falling from the maximum pedaling force and the second angle that does not reach the maximum pedaling force angle, it is difficult to perform a smooth traveling by the use of an inertia force when traveling on an uphill road. According to the present invention, a normal assist force is switched to an uphill assist force when the crank angle lies within the range. This allows a person to enjoy a smooth electric assist traveling with a good feeling even on an uphill road. To realize it, the uphill assist force is decided to maintain an output value equal to or more than the assist force from the first angle to the second angle.

For example, the output value of the uphill assist force may be approximately constant. For example, control may be performed such that a normal assist force at the first angle is maintained until the second angle. The output value of the uphill assist force may be controlled according to at least one of the pedaling force, crank angle, and bicycle speed detected. For example, the output value of the uphill assist force may be controlled to increase or decrease in accordance with the increase or decrease of the detected pedaling force unless the data goes below a constant value. Also, the output value of the uphill assist force may be controlled according to the crank angle so as to decrease at a slope gentler than the slope at which the pedaling force decreases from the first angle to the pedaling end angle, and increase at a slope gentler than the slope at which the pedaling force increases from the pedaling end angle to the second angle. This control can maintain an assist force greater than the normal assist force.

Preferably, the uphill assist force is decided so as to be connected smoothly to both the assist force at the first angle and the assist force at the second angle. For example, if an uphill assist force decided at the first angle sharply changes relative to the normal assist force applied immediately before, the normal assist force is controlled to asymptotically change so as to smoothly connect to the uphill assist force. On the other hand, if a normal assist force to be employed immediately after the second angle sharply changes relative to the uphill assist force applied immediately before, the uphill assist force is controlled to asymptotically change relative to the normal assist force so as to smoothly connect to it.

The uphill determination means according to the present invention determines whether the electric assist bicycle is traveling on the uphill road based on the pedaling force detected by the pedaling force detection means. For example, the uphill determination means determines traveling on the uphill road when the pedaling force detected by the pedaling force detection means while the crank angle detected by the crank angle detection means lies within a predetermined monitoring range exceeds a predetermined value. The followings are examples of specifically performing the above determination processing. If an average value of the pedaling force detected when the crank angle lies within the above monitoring range exceeds a predetermined value, then traveling on an uphill road is determined. Alternatively, if a pedaling force detected at a predetermined angle (e.g. maximum pedaling force angle) within the above monitoring range exceeds a predetermined value, then traveling on an uphill road is determined. Alternatively, if a ratio of a range where the pedaling force exceeds a predetermined value (which may be a function of the crank angle) within the above monitoring range to the above monitoring range is larger than a constant value, then traveling on an uphill road is determined. Alternatively, if the pedaling force exceeds a predetermined value (which may be a function of the crank angle) for a predetermined continuous period or over a predetermined continuous range of angle within the above monitoring range, then traveling on an uphill road is determined.

Preferably, referring to a crank angle when a pedaling starts in a pedal half-rotation cycle as a pedaling start angle, to a crank angle when the pedaling force becomes maximum as a maximum pedaling force angle, and to a crank angle when the pedaling ends as a pedaling end angle, the predetermined monitoring range of the crank angle is a range defined between the pedaling start angle and the maximum pedaling force angle in a pedal half-rotation cycle. This monitoring range is an interval at which pedals are strongly depressed so that the pedaling force increases when traveling on an uphill road. It is therefore possible to accurately determine whether traveling on an uphill road or not in the monitoring range. Supposing that the pedaling start angle be 0° and the maximum pedaling force angle be 90°, the monitoring range may be the whole range of 0° to 90°. Alternatively, it may be partial range of angle, e.g. 20° to 60°.

The crank angle detection means according to a preferable aspect comprises: a disk fixed coaxially to a sprocket;

a plurality of permanent magnets disposed on one surface of the disk at circumferentially and equally divided positions thereof; a magnetic field detection means disposed at a position fixed to a body frame, adjacent to the one surface of the disk; and a count means configured to count magnetic field pulse signals from the magnetic field detection means, and the crank angle detection means detects the crank angle based on a count value of the magnetic field pulse signals counted by the count means from a time when the pedaling force detection means detects a start of depressing pedals.

Other embodiments and effects will be apparent from the following descriptions in conjunction with the drawings below.

BRIEF DESCRIPTION OF DRAWINGS

Fig. 1 is a schematic view showing an electric assist bicycle according to an embodiment of the present invention.

Fig. 2 is a schematic view showing a control system of the electric assist bicycle shown in Fig. 1.

Fig. 3 is a side view showing a one-way clutch including a torque detection mechanism according to an embodiment of the present invention, the one-way clutch being used in the electric assist bicycle shown in Fig. 1.

Fig. 4 is a view showing the structure of a ratchet pawl side member of the one-way clutch and a spring bar used with the ratchet pawl side member, in which (a) is a perspective view showing the ratchet pawl side member with the spring bar attached, (b) is a perspective view showing the ratchet pawl side member without the spring bar, and (c) is a side view showing the spring bar.

Fig. 5 is a view showing engagement state between a ratchet tooth and a ratchet pawl of a one-way clutch (ratchet gear) to explain the principle of a pedaling force detection function of an electric assist bicycle shown in Fig. 1.

Fig. 6 is a view showing an example of rotation prevention means for preventing a ratchet pawl side member from rotating relative to a drive shaft, in which (a) is a schematic top view showing the structure of a ball spline, (b) is a schematic top view showing the structure of a spline key, and (C) is a schematic top view showing the structure of a key groove.

Fig. 7 is front and side views showing a power transmission gear used in a force synthesis mechanism according to an embodiment of the present invention.

Fig. 8 is an explanatory view showing an electric assist bicycle according to an embodiment of the present invention, with respective crank angles of a pedaling start angle, a maximum pedaling force angle, and a pedaling end angle.

Fig. 9 is a graph showing changes in time of a pedaling force, an assist force when an assist ratio is 1:1, and a synthesized force obtained by synthesizing the pedaling force and the assist force in an electric assist bicycle according to an embodiment of the present invention.

Fig. 10 is a flowchart showing a flow for deciding a crank angle $\theta$, a pedaling start angle $\theta s$, a maximum pedaling force angle $\theta m0$, and a pedaling end angle $\theta e0$ of an electric assist bicycle according to an embodiment of the present invention.

Fig. 11 is a flowchart showing a flow of a main routine of an electric assist bicycle according to an embodiment of the present invention.

Fig. 12 is a flowchart showing a flow of an uphill assist control routine.

Fig. 13 is a graph showing a pedaling force and an assist force when an uphill assist force is applied according to an embodiment of the present invention.

Fig. 14 is a flowchart showing a flow of an example of an uphill determination routine.

Fig. 15 is a flowchart showing a flow of another example of the uphill determination routine.

Fig. 16 is a subroutine flowchart showing a flow of the decision of a maximum pedaling force angle and an end angle according to another embodiment in the control shown in Fig. 10.

Fig. 17 is a view explaining the assist force drop on an uphill road according to a conventional electric assist control.

DESCRIPTION OF EMBODIMENTS

Embodiments of the present invention will be explained hereinafter with reference to the drawings.

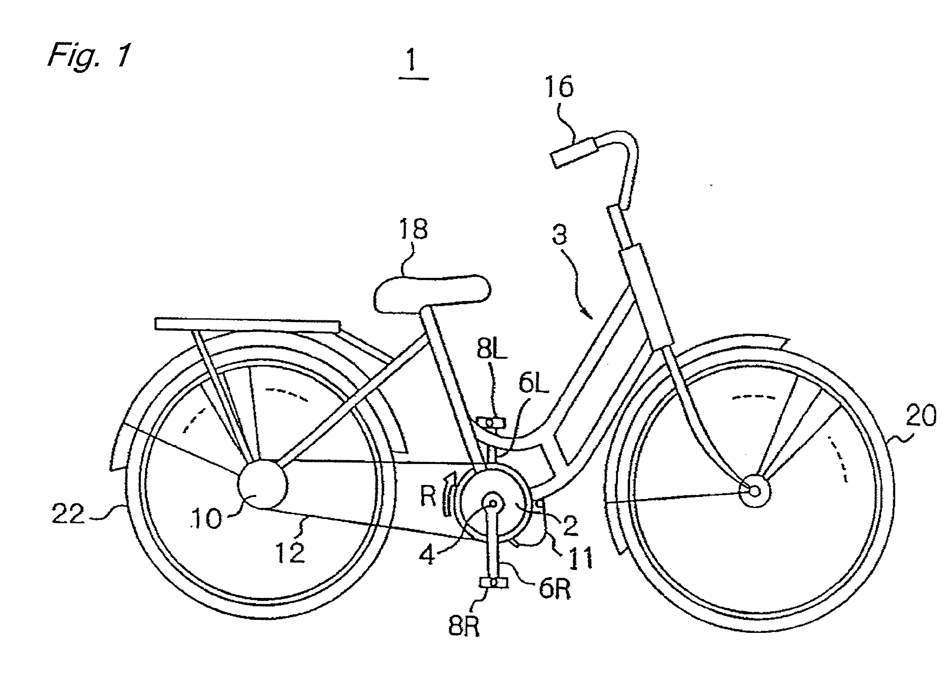

Fig. 1 schematically shows an electric assist bicycle 1. As shown in the same drawing, the main frame part of the electric assist bicycle 1 includes a body frame 3 made of metallic tubes, with a front wheel 20, a rear wheel 22, a handle 16, a saddle 18, etc. attached thereto in a well-known style.

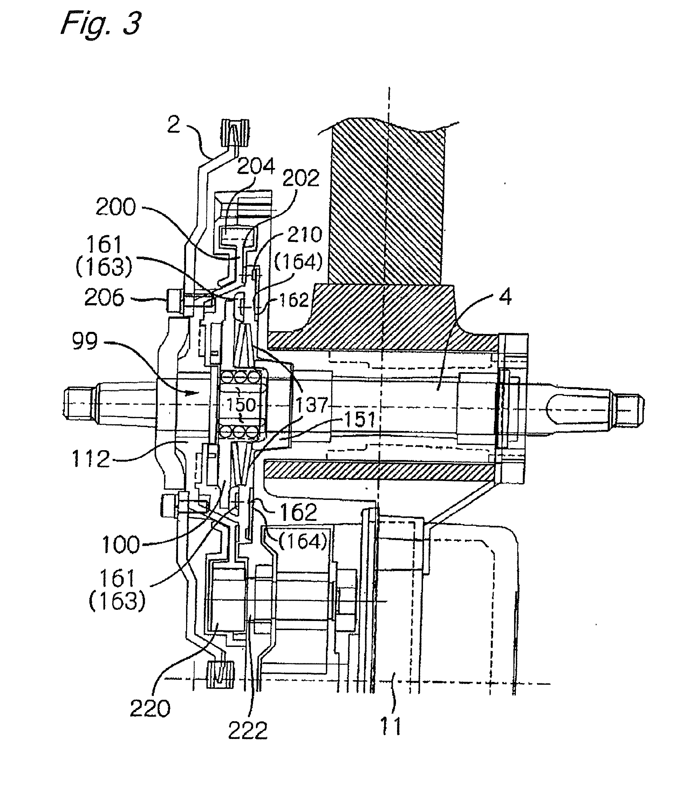

The center and lower portion of the body frame 3 supports a drive shaft 4 that axially rotates, with pedals 8L, 8R attached thereto via pedal cranks 6L, 6R. The drive shaft 4 coaxially supports a sprocket 2 via a one-way clutch (99 in Fig. 3 referred later) that transfers only the rotation in R direction corresponding to the traveling direction of the bicycle. An endless turn-around chain 12 is stretched and provided between the sprocket 2 and a rear wheel power mechanism 10 provided at the center portion of the rear wheel 22.

The electric assist bicycle 1 includes an electric assist unit 11 that generates supplemental electric power. The generated supplemental electric power is transmitted to a drive wheel 22 via a force synthesis mechanism to be described later.

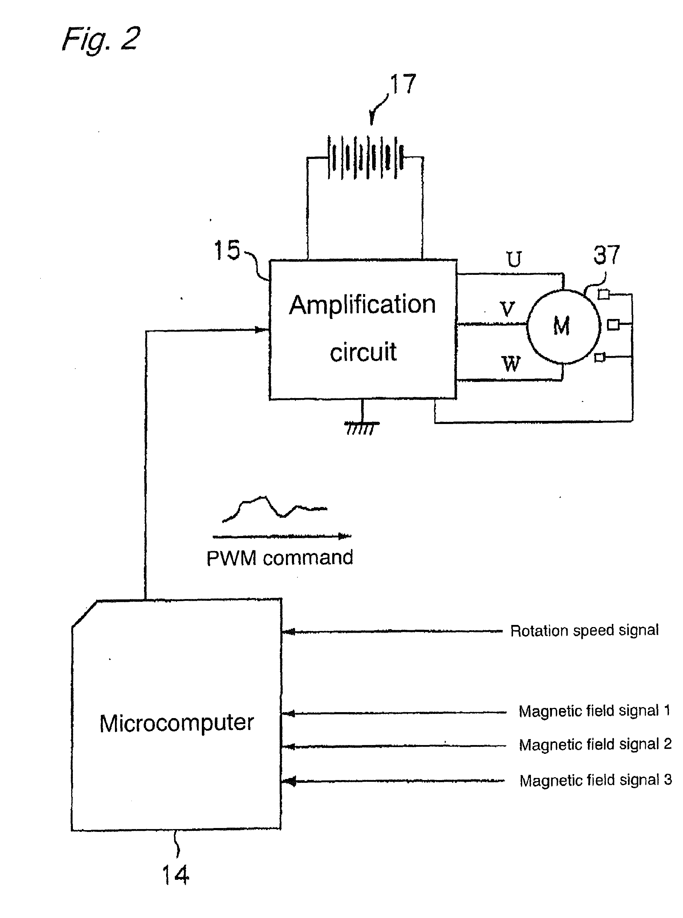

Fig. 2 schematically shows a control system of the electric assist bicycle 1, which is accommodated in the electric assist unit 11. The control system of the electric assist bicycle 1 includes a microcomputer 14 that totally controls electric processing for the whole bicycle, an electric motor 37 capable of performing a PWM control, and an amplification circuit 15 connected directly to the microcomputer 14 to amplify the power of the control signal. A battery 17 (outside the unit 11) for supplying electric power to the electric motor 37 is connected to the amplification circuit 15. The electric assist unit 11 also accommodates a reduction gear that reduces the rotation speed of the motor, and so on.

The microcomputer 14 inputs a magnetic field pulse signal for detecting a crank angle, i.e. an angle of the pedal crank 6R (6L) relative to the body frame, and magnetic field signals 1, 2, and 3 for calculating a pedaling force. Means for generating these input signals will be described later. Additionally, a signal for designating a mode (normal mode, turbo mode, eco mode, etc., for example) of the electric assist may be input. The microcomputer 14 calculates the traveling speed, crank angle, and pedaling force based on those inputs signals, and performs electric processing for deciding an assist ratio (assist force/pedaling force) in conformity with a predetermined algorism. Then, the microcomputer 14 sequentially outputs PWM commands that correspond to the assist force corresponding to the decided assist ratio to control the electric motor 37 to generate the assist force.

A pedaling force detection mechanism, a force synthesis mechanism, and a mechanism for detecting the crank angle and bicycle speed of the electric assist bicycle according to an embodiment of the present invention will be explained below.


(Pedaling force detection mechanism)

Referring to Figs. 3 to 7, the pedaling force detection mechanism that outputs the magnetic fields signals 1, 2, and 3 to be received by the microcomputer 14 will be explained. The pedaling force detects a magnetic field that varies due to the deformation of the one-way clutch 99 according to the change of the pedaling force.

The one-way clutch 99 includes a ratchet pawl side member 100 and a ratchet tooth side portion 112 as shown in Fig. 3.

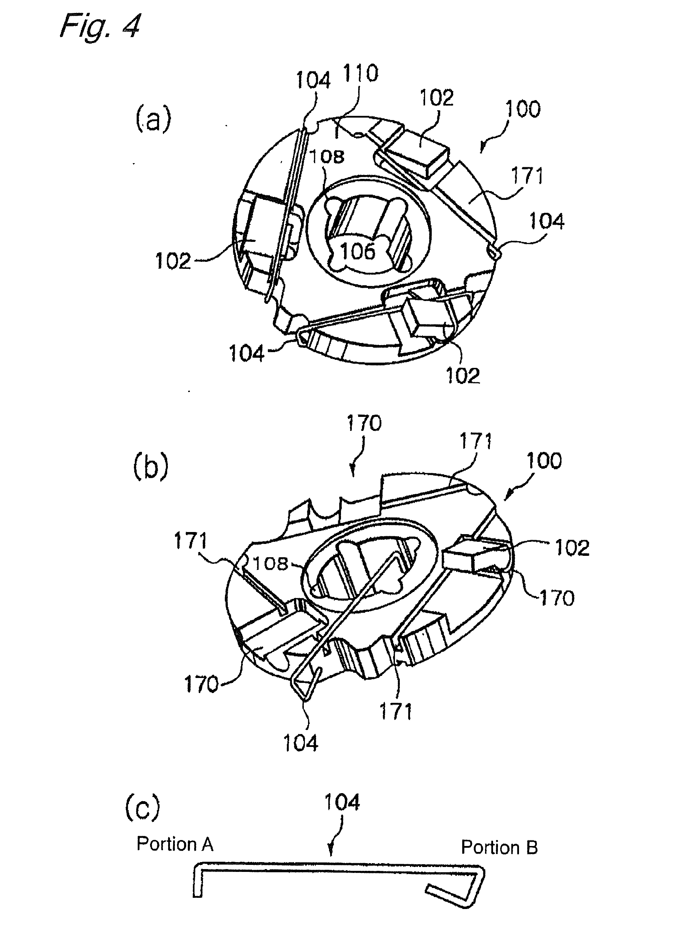

As shown in Fig. 4(a), the ratchet pawl side member 100 has approximately a disk-like shape including a ratchet pawl side member bore 106 at the center thereof for receiving a drive shaft 4, with three rigid ratchet pawls 102 disposed on the second engagement surface 110 thereof opposing to the ratchet tooth side portion 112, at equal angles of circumference thereof. The ratchet pawl side member 100 includes three hollows 170 for accommodating the ratchet pawls 102, respectively, each hollow being formed along the circumferential direction of the member 112. Accordingly, the ratchet pawl 102 pivots while the pivot axis portion thereof is accommodated in the hollow 170, and thus the angle of the ratchet pawl 102 relative to the second engagement surface 110 varies according to the pivot.

With reference to Fig. 4(b) again, the ratchet pawl side member 100 includes three straight grooves 171 for accommodating spring bars 104, each groove 171 being formed adjacent to each hollow 170, and both ends thereof extending to the peripheral edge of the ratchet pawl side member 100. The spring bar 104 has one end A bent at almost right angles and has the other end B bent to be hooked as shown in Fig. 4(c). In order to attach the spring bar 104 into the straight groove 171 of the ratchet pawl side member 100, only sliding the spring bar 104 in the straight groove 171 until the hooked end B pinches and holds the ratchet pawl side member 100 like a clip allows the spring bar 104 to be easily attached to the ratchet pawl side member 100. There is, however, the possibility that the spring bar 104 is missing as it is, so that the end A bent at right angles and engaged with the side wall of the ratchet pawl side member prevents the spring bar from missing. Consequently, the spring bar 104 in this embodiment realizes both the attachment with facility and the missing prevention.

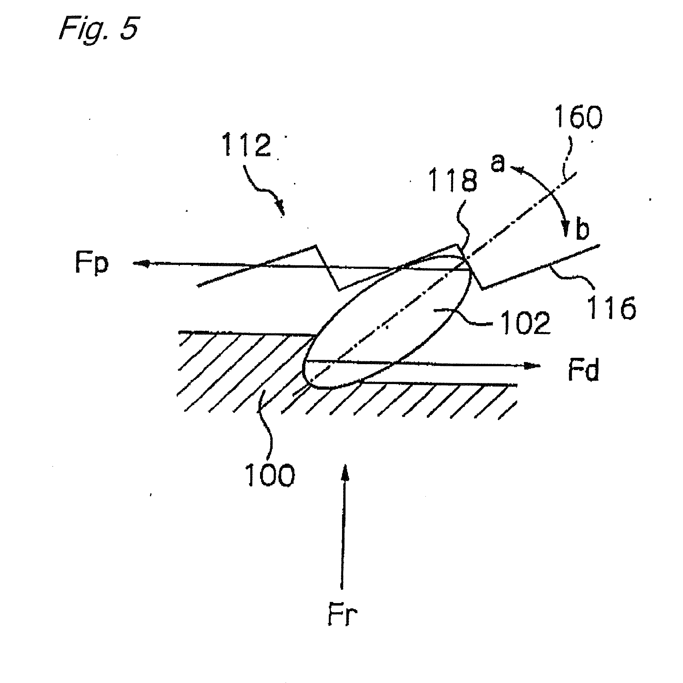

When the spring bar 104 is attached into the straight groove 171 of the ratchet pawl side member 100, the ratchet pawl 102 rises up with its longitudinal direction (balance direction 160 in Fig. 5) having a predetermined angle to the second engagement surface 110 with no external force. When the ratchet pawl 102 biases toward the upper direction a or lower direction b, the spring bar 104 exerts a slight elastic force on the ratchet pawl 102 to bring the bias back in the balance direction 160 as shown in Fig. 5.

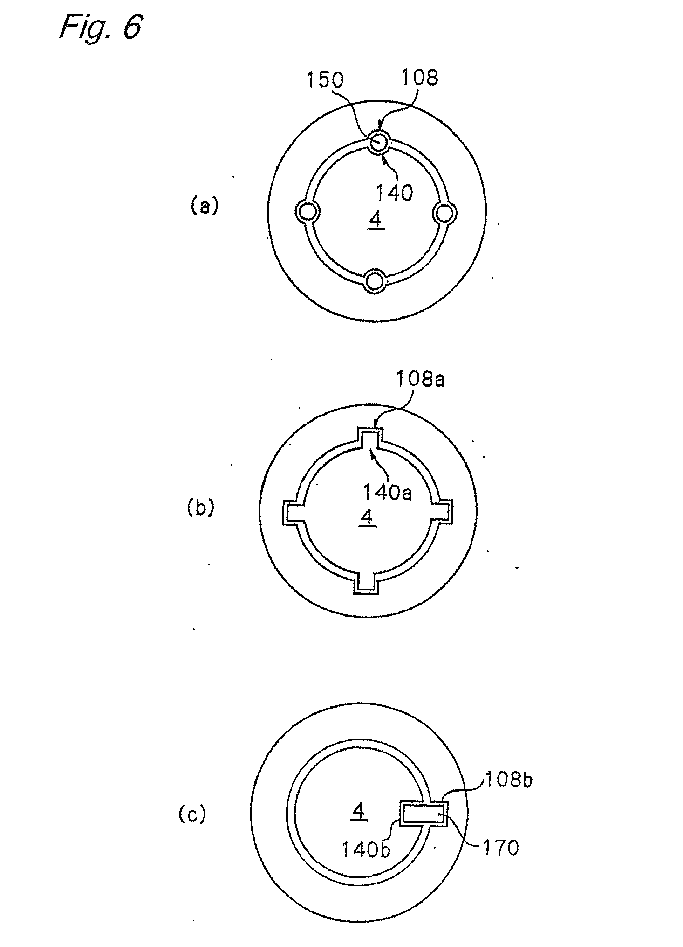

First rotation prevention grooves 108 extending in the axial direction 5 are provided at four portions on the inner wall of the ratchet pawl side member bore 106. Second rotation prevention grooves 140 extending in the axial direction 5 and respectively facing the first rotation prevention grooves 108 are provided at four portions on the outer wall of the drive shaft 4 that slidably contacts with the inner wall of the ratchet pawl side member bore 106. The first rotation prevention grooves 108 and the second rotation prevention grooves 140 respectively facing thereto forms cylindrical cavities extending in the axial direction, each cylindrical cavity accommodating many steel balls 150 to be filled as shown in Fig. 6(a). This allows the ratchet pawl side member 100 to move along the axial direction 5 with the minimum friction resistance and prevents the member 100 from rotating relative to the drive shaft 4. This is a kind of ball splines, but other kinds of ball splines, such as an endless turn-around ball spline, are applicable as such a slidable rotation prevention means.

Means other than the ball spline in Fig. 6(a) may be used as a manner for attaching the ratchet pawl side member 100 to the drive shaft 4. Specifically, applicable rotation prevention means includes so called key spline style, in which the drive shaft 4 has protrusions 140a extending in the axial direction, and the ratchet pawl side member 100 has the third rotation prevention grooves 108a that accommodate the protrusions 140a, respectively, as shown in Fig. 6(b). It should be appreciated in Fig. 6(b) that the ratchet pawl side member 100 may have the protrusions 140a and the drive shaft 4 may have the third rotation prevention grooves 108a. Further, applicable rotation prevention means also includes so called key groove style, in which the ratchet pawl side member 100 and the drive shaft 4 have the fourth rotation prevention grooves 108b and the fifth rotation prevention grooves 140b extending in the axial direction, respectively, and a key plate is accommodated in the rectangular solid-like cavity defined by those grooves 108b and 140b, as shown in Fig. 6(c).

A belleville spring 137 intervenes between the ratchet pawl side member 100 and a support disk 151 fixed to the drive shaft 4 as shown in Fig. 3. The both ends of the belleville spring 137 abut on the rear surface of the ratchet pawl side member 100 and the support disk 151, respectively. Accordingly, the elastic force of the belleville spring 137 opposes a slide motion toward the axial and inner direction of the ratchet pawl side member 100.

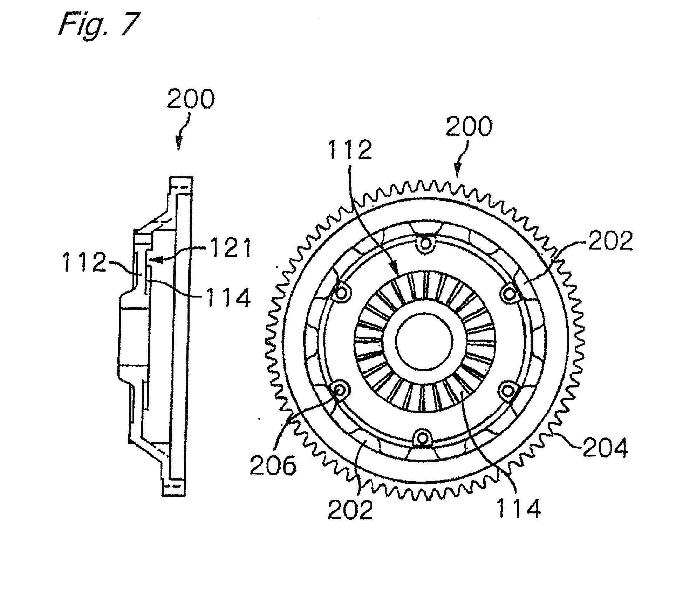

On the other hand, the ratchet tooth side portion 112 is formed on the front surface, namely the first engagement surface 121, of the power transmission gear 200 as shown in Fig. 7. A plurality of ratchet teeth 114 that engage with the ratchet pawls 102 are formed on the first engagement surface 121. A ratchet tooth 114 includes slopes 118 steeper relative to the first engagement surface 121 and more gentle slopes 116, formed alternately and periodically along the peripheral direction of the ratchet tooth side portion as shown in Fig. 5. The ratchet tooth side portion 112 is slidably supported on the drive shaft 4, with the first engagement surface 121 facing the second engagement surface 110 of the ratchet pawl side member 100, and with ratchet pawls 102 and ratchet teeth 112 engaging with each other (Fig. 5). Accordingly, the drive shaft 4 is operablly connected with the ratchet tooth side portion 112 only via the engaged portion between the ratchet pawls 102 and the ratchet teeth 112.

As shown in Fig. 3, the power transmission gear 200 including the ratchet tooth side portion 112 is concentrically fixed to the sprocket 2 via the fixing pin 206, and a pedal axis is fixed to the tip of the drive shaft 4. This way, a ratchet gear 99 is completed, in which the drive shaft 4 is connected with the sprocket 4 so as to transmit only the rotation due to a pedaling force in a direction for advancing the bicycle.

Further, the ratchet pawl side member 100 of the ratchet gear 99 has a ring-like permanent magnet 161 formed to be concentric with the drive shaft 4 and the ratchet pawl side member 100. Preferably, one of the two surfaces of the ring-like permanent magnet 161 is N pole and the other is S pole, and the permanent magnet 161 is disposed such that the central axial direction thereof coincides with the axial direction of the ratchet gear 99.

A plurality (three in this embodiment) of hall devices 162 are disposed respectively at three predetermined positions on a plane perpendicular to the axis of the drive shaft 4. Preferably, the three predetermined positions where the hall devices are disposed are positions having equal distances of radial direction and equal angles of circumference with respect to the center of the axis. Further, the predetermined positions where the hall devices are disposed correspond to fixed positions of the body frame in proximity to the ring-like permanent magnet 161. These hall devices 162 are coupled to the microcomputer 14 (Fig. 2). The magnetic field detection signals 1, 2, and 3 respectively output from the three hall devices 162 are received by the microcomputer 14 (Fig. 2).

In an alternative embodiment, a ring member 163 made of magnetic substance such as iron may be employed in place of the ring-like permanent magnet 161. In this case, magnets 164 are fixed to predetermined positions where the ratchet pawl side member 100 relatively moves, e.g., positions in proximity to the hall devices 162. It should be appreciated that the ring member 163 may be made of an arbitrary material, e.g., diamagnetic substance, capable of changing the magnetic field of the magnets 164.

An operation of the pedaling force detection mechanism will be explained hereinbelow.

As a rider applies a foot force to the pedals 8R, 8L (Fig. 1) to rotate the drive shaft 4 in a direction for advancing the bicycle, this rotational force is transmitted to the ratchet pawl side member 100 that is rotatably and slidably supported on the drive shaft 4. At this time, the ratchet pawl 102 is subjected to the force Fd corresponding to the pedaling force from the ratchet pawl side member 100 so that the tip of the ratchet pawl 102 abuts on the steeper slope 118 of the ratchet tooth of the ratchet tooth side portion 112 to transmit the force to the ratchet tooth, as shown in Fig. 5. The ratchet tooth side portion 112 is coupled to the sprocket 2 so that the tip of the ratchet pawl 102 is subjected to the force Fp due to load for driving from the steeper slope 118. The ratchet pawl 102 that has been subjected to the forces Fp and Fd in directions opposite to each other from both the ends thereof rotates in the direction a, thereby rising up. At this time, the rising up of the ratchet pawl 102 causes the ratchet pawl side member 100 to move in an axial and inner direction and thus press the belleville spring 137 that intervenes between the ratchet pawl side member 100 and the support disk 151. The belleville spring 137 exerts an elastic force Fr in opposition to it on the ratchet pawl side member 100. This force Fr immediately balances the force that reflects the pedaling force and moves the ratchet pawl side member 100 in the axial direction. As a result, the position of the ratchet pawl side member 100 in the axial direction represents a physical quantity that reflects the pedaling force.

In the embodiment in which the ring-like permanent magnetic field, the intensity of a magnetic field detected by the hall device 162 varies according to the position of the ratchet pawl side member 100 in the axial direction. Specifically, as the pedaling force increases, the ratchet pawl side member 100 slides in the axial and inner direction so that the permanent magnet 161 approaches the hall device 162, thereby increasing the intensity of the magnetic field detected by the hall device. Conversely, as the pedaling force decreases, the ratchet pawl side member 100 slides in the axial and outer direction so that the permanent magnet 161 departs from the hall device 162, thereby decreasing the intensity of the magnetic field detected by the hall device.

The microcomputer 14 averages (including simple additional operation) magnetic field detection signals detected by the three hall devices 162 to obtain the average magnetic field intensity. The microcomputer 14 includes a memory that stores a look up table representing a functional relation between the magnetic field intensity and the position of the permanent magnet 161 in the axial direction reflecting the pedaling force, and refers to the table to obtain the pedaling force T corresponding to the calculated average magnetic field intensity.

Since the microcomputer 14 averages the magnetic fields at plural positions in the axial direction as described above, not only an S/N ratio can be improved, but also the pedaling force T can be more precisely obtained by cancelling deviation of the magnetic field intensity due to the swing of the ratchet pawl side member 100.

Additionally, in an alternative embodiment where a ring member 163 made of a magnetic or diamagnetic substance is used, a magnetic field distribution of a magnet 164 varies due to variation of influence of the magnetic or diamagnetic substance according to position of the ring in the axial direction. Therefore, in the alternative embodiment also, the pedaling force T can be obtained from the detected magnetic field intensity as described above.

The above pedaling force detection mechanism has the following excellent effects.

(1) Since a belleville spring 137 abuts on a ratchet pawl side member that does not rotate with respect to a drive shaft 4, and a support disk 151, the belleville spring 137 also rotates together with the drive shaft 4, the ratchet pawl side member 100, and the support disk 151. Accordingly, there is no friction as well as rotational resistance between the belleville spring 137 and the ratchet pawl side member 100.

(2) Since the one-way clutch and the pedaling force detection mechanism are realized as one unit, this facilitates reduction in the number of parts as well as reduction in size, weight and cost.

(3) Since a magnetic field detection sensor is provided in the vicinity of the belleville spring with respect to a magnetic field generation unit in the pedaling force detection portion, friction and rotational resistance of the belleville spring are not generated to improve accuracy as well as durability of a torque detection apparatus.

(4) Since reduction in size and weight and simplicity of the pedaling force detection mechanism is attained at higher level as described in the above items (2) and (3), there is a higher possibility that even an ordinary bicycle is provided with such a pedaling force detection mechanism.

(5) For the reasons shown in the above items (2) and (3), an assist feeling with better control responsibility than one obtained by a conventional mechanism can be realized by employing a pedaling force detection mechanism focusing on noncontact style magnetic field intensity.

(6) For the reasons shown in the above items (2) and (3), there are less wasteful movements (until detection by a sensor) of a pedal than a conventional mechanism (in which a coil spring is used), and feeling when depressing a pedal according to the above embodiment becomes the same as when depressing a pedal of an ordinary bicycle, as compared with a conventional mechanism where there is a feeling of elasticity when depressing a pedal.

(Force synthesis mechanism)

A force synthesis mechanism will be explained with reference to Figs. 3 and 7.

Fig. 3 shows a power transmission gear 200 fixed coaxially to a sprocket 2 using a fixing pin 206 as described above. The power transmission gear 200 has a plurality of teeth 204 at its peripherally as shown in Fig. 7.

The teeth 204 of the power transmission gear 200 are engaged with gear 220 provided at the tip of an assist power output shaft 222 of an electric assist unit 11 as shown in Fig. 3. An assist power output from the electric assist unit 11 is therefore transmitted to the power transmission gear 200 through the shaft 222 and the gear 200, and is in turn transmitted from the power transmission gear 200 to a drive wheel through a sprocket 2 and chain 12. In this way, a pedaling force and an assist force are synthesized. The number of the tooth 204 of the power transmission gear 200 is more than teeth of the gear 220 so that the power transmission gear 200 also functions as a reduction gear.

(Mechanism for detecting crank angle and bicycle speed)

A crank angle detection mechanism of an electric assist bicycle will be explained with reference to Figs. 3, 7 and 8.

Twelve permanent magnets 202 are disposed on one surface of the power transmission gear 200 at twelve circumferentially and equally divided positions as shown in Fig. 7. Each permanent magnet 202 is aligned such that one pole (N pole or S pole) is exposed and the other pole faces the one surface, and thus the direction from the one pole to the other pole coincides with the axial direction of the drive shaft 4. It is preferable to direct all the ends having the same pole in the same direction, but the permanent magnets 202 may be arranged such that the magnetic poles of adjacent permanent magnets are alternately changed.

With reference to Fig. 3, a hall device 200 is disposed at a position fixed to a body frame, adjacent to the surface of the power transmission gear 200 on which magnets 202 are disposed. The radial distance from the drive shaft 4 to the hall device 210 is substantially the same as the radial distance from the drive shaft to each permanent magnet 202. Since the power transmission gear 200 rotates along with the rotation of pedals while the hall device 210 is stationary with respect to the body, magnetic fields of the permanent magnets 202 traverses the detection range of the hall device 210 from one to another as the pedal crank rotates. As a result, the hall device 210 outputs a signal of detection pulses, the number of pulses depending upon the number of rotations of the pedal crank. The microcomputer 14 (Fig. 2) receives the magnetic field pulse signal.

Since the power transmission gear 200 rotates together with the pedal crank and the sprocket 2, rotation speed of the power transmission gear 200 reflects bicycle speed and crank angular speed. Consequently, the microcomputer 14 can calculate the bicycle speed and an increment of the crank angle from the number of counts of the magnetic field pulse signal per unit time.

As shown in Fig. 8, depressing on the pedal 8R of the right pedal crank 6R starts at the pedaling start angle, then the pedaling force gradually increases as the crank angle $\theta$ increases, then the pedaling force becomes maximum at the maximum pedaling force angle, then the pedaling force gradually decreases to reach substantially zero at the pedaling end angle. In this manner, a pedal half-rotation cycle of the right pedal crank 6R is completed. When the crank angle further increases by a constant angle from the end angle, depressing on the pedal 8L of the left pedal crank 6L starts and thus a pedal half-rotation cycle of the left pedal crank 6L is similarly performed.

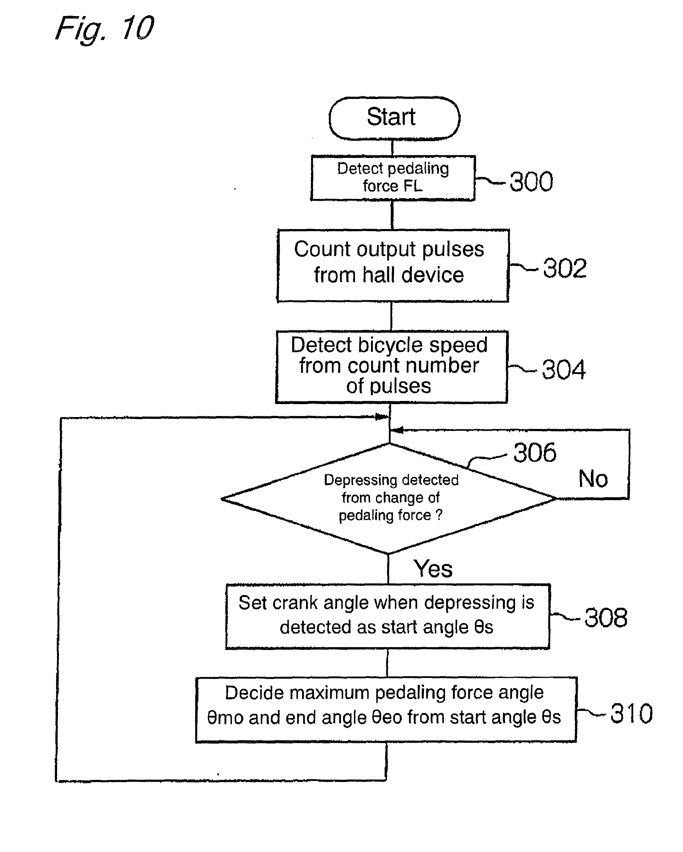

A manner of obtaining a (an absolute) crank angle relative to the body from the number of counts of the magnetic field pulse signal will be explained herein with reference to Fig. 10.

As shown in Fig. 10, the pedaling force detection mechanism described above executes a process of detecting the pedaling force $F_L$ (step 300), and then processing of counting the number of output pulses from the hall device 210 is executed (step 302). At steps 302 and 304, the microcomputer 14 monitors output signals from the hall device 162 and the hall device 210 at all times regardless of whether the pedaling is actually carried out or not, and whether the pedaling force is detected or not (e.g. during which the bicycle travels on a downhill road). When the number of output pulses is counted at step 302, a bicycle speed is detected from the count number of the pulses (step 304). It should be noted that the processing at steps 300, 302 and 304 is always executed by the microcomputer 14 even after the control goes to the next step.

Next, it is determined whether depressing of the pedals is detected from change of the detected pedaling force $F_L$ (step 306). For example, the pedaling start is determined when the detected pedaling force $F_L$ exceeds a predetermined threshold value. IF the depressing of the pedals is detected (affirmative determination at step 306), a crank angle when the depressing is detected is set as the start angle $\theta s$ (step 308), and then the maximum pedaling force angle $\theta m0$ and the end angle $\theta e0$ are decided from the start angle $\theta s$. In one embodiment, the maximum pedaling force angle $\theta m0$ and the end angle $\theta e0$ may be typical fixed values that have been empirically obtained in advance.

From the foregoing descriptions, the power transmission gear 200 functions as a means in which a ratchet tooth side portion 112 of a one-way clutch 99 constituting pedaling force detection means, a force synthesis mechanism, a reduction gear when synthesized, a bicycle speed detection mechanism, a crank angle detection mechanism are incorporated. This facilitates reduction in the number of parts and reduction in bulk in the axial direction with respect to an electric assist bicycle 1.

(Operation of the embodiment of the present invention)

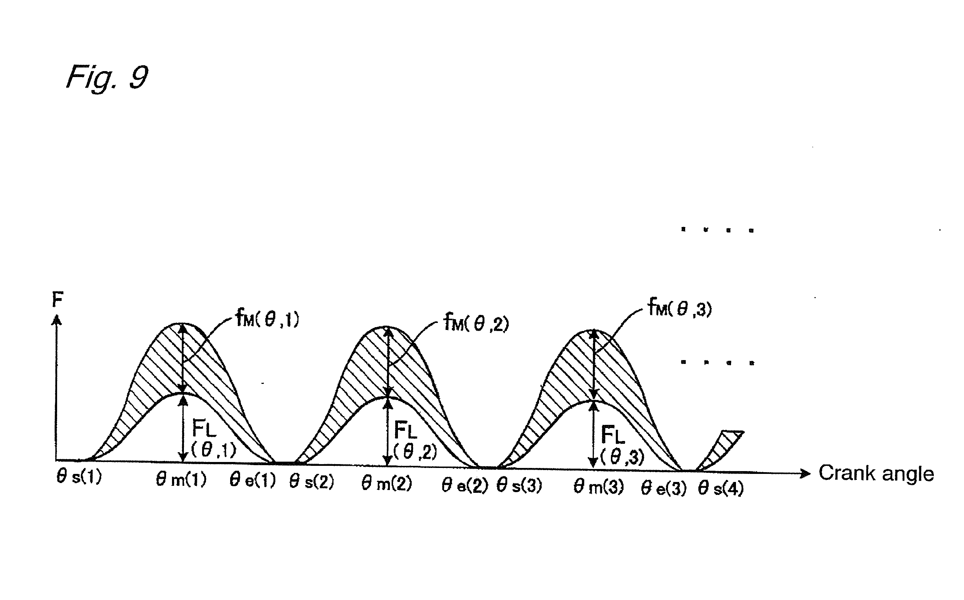

Fig. 9 shows a graph in which a pedaling force and an assist force change as a function of the crank angle. $\theta s(k)$, $\theta m(k)$, and $\theta e(k)$ denotes a pedaling start angle, maximum pedaling force angle, and a pedaling end angle in the k-th pedal half-rotation cycle (cycle number k = 1, 2, 3, ...) in Fig. 9. For example, if the pedal half-rotation cycle where k = 1 relates to a right pedal crank 6R, then the pedal half-rotation cycle where k = 2 inevitably relates to a left pedal crank 6L, and accordingly left and right half cycles alternately appear thereafter.

$\theta s(k)$, $\theta m(k)$, and $\theta e(k)$ increases in the drawing as the cycle number k increase as shown in Fig. 2, but it should be noted that when a term "crank angle" is only used, $\theta s(k)$ is reset to zero every cycle. In other words, the maximum pedaling force angle and the pedaling end angle that will be described later are such relative crank angles when the start angle is set to zero.

A pedaling force $F_L(\theta, k)$ gradually increases from the crank angle $\theta s(k)$, becomes maximum at $\theta m(k)$, then

gradually decreases, and finally becomes to be substantially zero at θe(k) as shown in Fig. 9. fm(θ, k) indicates the change of an assist force in a case where an assist ratio is constant irrespective of the crank angle in a pedal half-rotation cycle when the bicycle speed is constant in the cycle. The crosshatched portion in Fig. 9 corresponds to the assist force added when the assist ratio is constant. It should be understood that fm(θ, k) also varies in accordance with the change of the pedaling force $F_L(\theta, k)$.

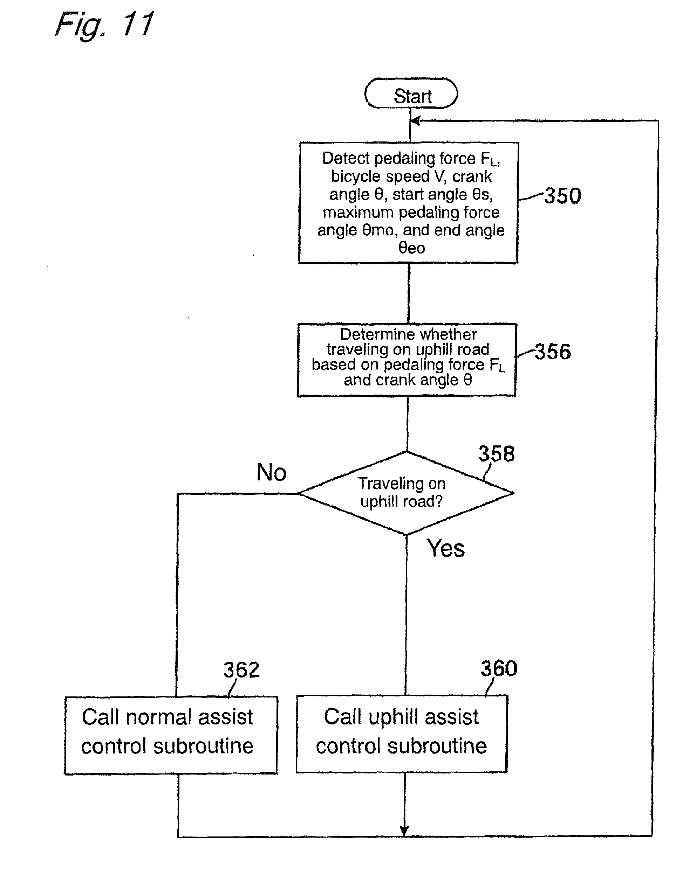

Flows of electric assist processing in the electric assist bicycle 1 according to the embodiment will be described with reference to the flowcharts in Fig.11 through Fig. 15.

As shown in Fig. 11, detection of a pedaling force $F_L$, a bicycle speed V, a crank angle θ, a pedaling start angle θs, a maximum pedaling force angle θm0, and an end angle θe0 is carried out (step 350). This detection process is also carried out at any time during which the following processes are being carried out.

It is determined on the basis of the pedaling force $F_L$ and the crank angle θ whether the electric assist bicycle is traveling on an uphill road (step 356). The uphill determination manner in detail will be described later. When it is determined that the bicycle is not traveling on an uphill road (negative determination at step 356) as a result of the uphill determination processing at step 356, a normal assist control subroutine is called (step 362) and accordingly the normal assist control is carried out. This normal assist control subroutine includes calculating an assist force based on the detected pedaling force $F_L$ and bicycle speed V, and carrying out a motor control for outputting the assist force. This assist force is indicated as fm(θ, k) in Fig. 9. The processing at steps 350 and 356 is performed in parallel with the normal assist control.

When it is determined at step 358 that the bicycle is traveling on an uphill road, an uphill assist control subroutine is called (step 360) and accordingly the uphill assist control is carried out. The processing at steps 350 and 356 is performed in parallel with the uphill assist control.

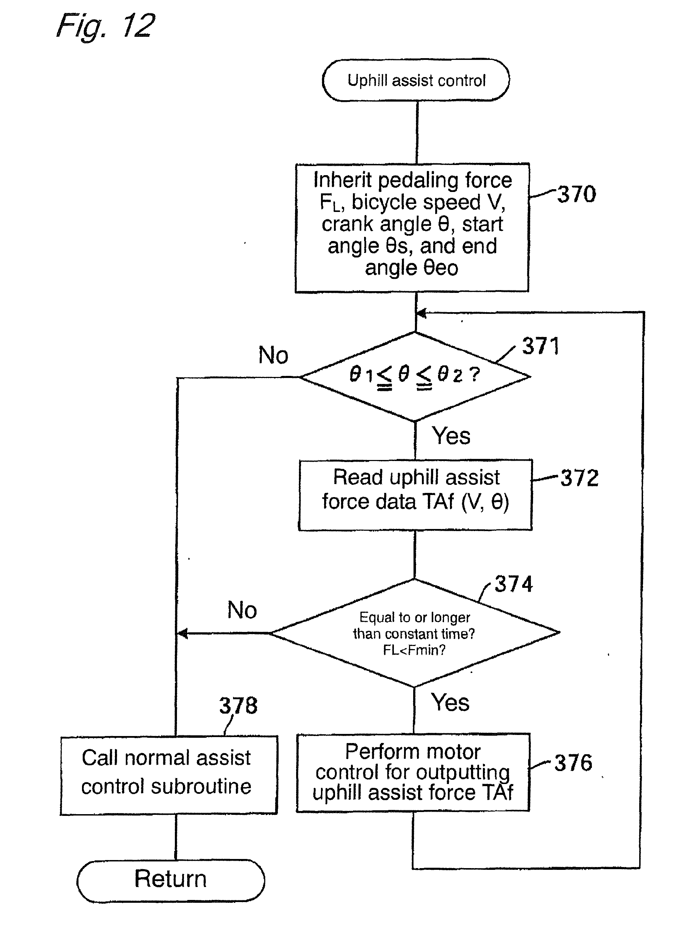

A detail process flow of the uphill assist control at step 360 will be described below with reference to Fig. 12.

Entering the uphill assist control routine, the pedaling force $F_L$, the bicycle speed V, the crank angle θ, the pedaling start angle θs, the maximum pedaling force angle θm0, and the end angle θe0 detected at step 350 in Fig. 11 are inherited as shown in Fig. 12 (step 370).

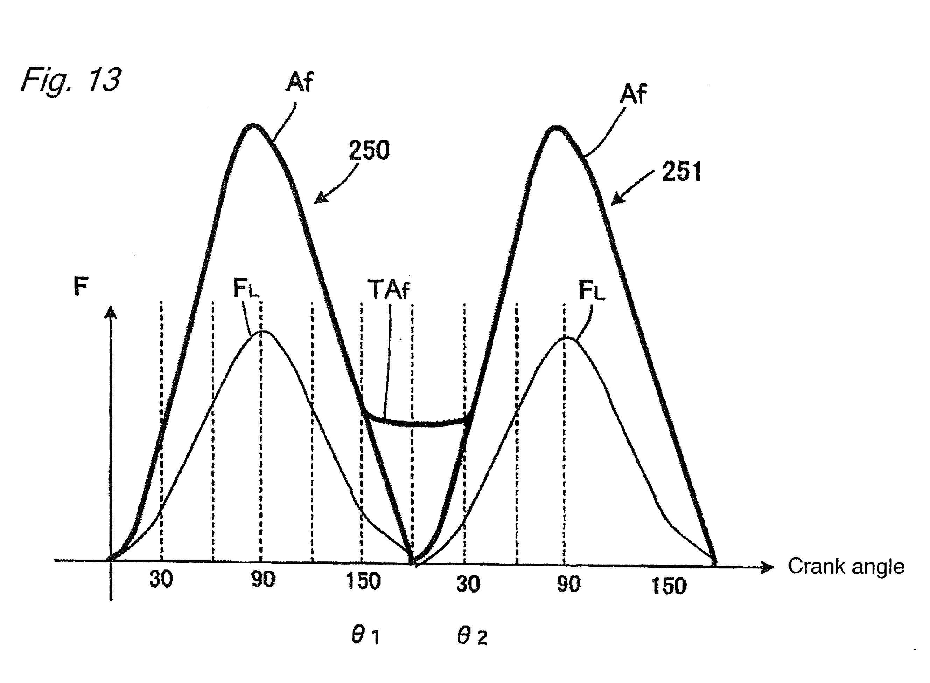

Thereafter, it is determined whether the crank angle θ lies between $\theta_1$ and $\theta_2$ (step 371), where the crank angle $\theta_1$ is a crank angle at which the pedaling force continues decreasing to be smaller than the maximum pedaling force in the pedal half-rotation cycle 250 as shown in Fig. 13, and the crank angle $\theta_2$ is a crank angle between the pedaling start angle and the maximum pedaling force angle in the following pedal half-rotation cycle 251. Supposing, for example, that the pedaling start angle be 0°, and thus the maximum pedaling force angle and the pedaling end angle be 90° and 180°, respectively, in the pedal half-rotation cycles 250, 251, then the crank angle $\theta_1$ is decided to be an angle in the former pedal half-rotation cycle 250, e.g. 150°, and the crank angle $\theta_2$ is decided to be an angle in the latter pedal half-rotation cycle 250, e.g. 30°. Since the pedaling force greatly drops between the crank angles $\theta_1$ and $\theta_2$, it is difficult to perform a smooth traveling by the use of an inertia force when traveling on an uphill road.

When it is determined that the crank angle θ does not lie between $\theta_1$ and $\theta_2$ at step 371, a normal assist control subroutine is called (step 378) and the normal assist control is performed since the pedaling force is sufficiently large and the assist force is relatively large. This processing of calling the normal assist control subroutine at this step is regarded as continuous processing when the processing at step 362 in Fig. 11 has been already executed.

In contrast, an uphill assist force data TAf(V, θ) stored in advance or calculated in real time is read (step 372), when it is determined that the crank angle θ lies between $\theta_1$ and $\theta_2$ at step 371, in other words, that the crank angle θ enters a crank angle range in which the pedaling force greatly drops. In Addition, the microcomputer 14 measures a continuous time during which the pedaling force $F_L$ lies below a predetermined threshold $F_{min}$, in the background, and determines whether the continuous time is equal to or longer than a certain constant time (step 374). It should be appreciated that $F_{min}$ may be set to a value close to zero. If the relation of the pedaling force $F_L < F_{min}$ has continued for the constant time (affirmative determination at step 374), the pedaling force is substantially zero, and thus considering that no pedaling action is currently carried out, and finely returning from the uphill assist control. In this case, the process returns to the normal assist action, but the assist force also becomes zero since the pedaling force is zero.

After reading the uphill assist force data TAf, a motor control for outputting the uphill assist force is performed (step 376). Then, the process returns to step 371, that is, the uphill assist force control is continuously carried out while the crank angle lies between $\theta_1$ and $\theta_2$. The normal assist control is suspended when the uphill assist control at step 376 starts, but it is resumed when the crank angle goes beyond the interval of angle.

Consequently, when processing for the uphill assist control in Fig. 12 is executed, the normal assist force is switched to the uphill assist force TAf while the crank angle lies between $\theta_1$ and $\theta_2$. This can provide a smooth electric assist traveling with a good feeling even on an uphill road.

Some examples of a manner of calculating the uphill assist force data TAf that are read at step 372 in Fig. 12 are as follows.

(1) The uphill assist force data TAf is controlled to be approximately constant while the crank angle lies between $\theta_1$

and $\theta_2$. For example, it is so controlled that a normal assist force Af(V, $\theta$) obtained by carrying out a calculation based on a pedaling force and a bicycle speed at the crank angle $\theta_1$ is maintained until the crank angle $\theta_2$. In this case, TAf is not a function of the crank angle.

The uphill assist force data TAf may be controlled according to at least one of the pedaling force $F_L$, crank angle $\theta$, and bicycle speed V detected, like the following (2) and (3) for example.

(2) The uphill assist force data TAf is controlled to increase or decrease according to the increase or decrease of the detected pedaling force $F_L$ unless the data goes below a constant value.

(3) The uphill assist force data TAf is controlled according to the crank angle 8 so as to decrease at a slope gentler than the slope at which the pedaling force $F_L$ decreases from the crank angle $\theta_1$ to the pedaling end angle $\theta e0$, and increase at a slope gentler than the slope at which the pedaling force $F_L$ increases from the pedaling end angle $\theta e0$ to the crank angle $\theta_2$. This control can maintain an assist force greater than the normal assist force.

As for any of the above uphill assist force calculation manners (1) to (3), it is preferable to decide the uphill assist force so as to be connected smoothly to both the normal assist force at the crank angle $\theta_1$ and the normal assist force at the crank angle $\theta_2$. Specifically, for example, if an uphill assist force decided at the angle $\theta_1$ sharply changes relative to the normal assist force applied immediately before, the normal assist force is controlled to asymptotically change so as to smoothly connect to the uphill assist force. On the other hand, if a normal assist force to be substitutively employed immediately after the crank angle $\theta_2$ sharply changes relative to the uphill assist force applied immediately before, the uphill assist force is controlled to asymptotically change relative to the normal assist force so as to smoothly connect to it.

Further, as to the above uphill assist force calculation manners (1) to (3), each of those may be individually employed. Alternatively, some of those may be combined for use.

The determination as to whether traveling on an uphill road or not at step 356 in Fig. 11 may be based on a pedaling force detected in a monitoring range between the pedaling start angle and the maximum pedaling force angle. This monitoring range is an interval at which pedals are strongly depressed so that the pedaling force increases when traveling on an uphill road. It is therefore possible to accurately determine whether traveling on an uphill road or not in the monitoring range. Supposing that the pedaling start angle be 0° and the maximum pedaling force angle be 90° for example as shown in Fig. 13, the monitoring range may be the whole range of 0° to 90°. Alternatively, it may be partial range of angle, e.g. 20° to 60°.

At step 356 in Fig. 11, if a pedaling force $F_L$ detected when the crank angle lies within the above monitoring range exceeds a predetermined value, then it is determined that the bicycle is traveling on an uphill road. The followings are examples of specifically performing the above determination processing.

(1) If an average value of the pedaling force detected when the crank angle lies within the above monitoring range exceeds a predetermined value, then traveling on an uphill road is determined.
(2) If a pedaling force detected at a predetermined angle (e.g. maximum pedaling force angle) within the above monitoring range exceeds a predetermined value, then traveling on an uphill road is determined.
(3) If a ratio of a range where the pedaling force exceeds a predetermined value (which may be a function of the crank angle) within the above monitoring range to the above monitoring range is larger than a constant value, then traveling on an uphill road is determined.
(4) If the pedaling force exceeds a predetermined value (which may be a function of the crank angle) for a predetermined continuous period or over a predetermined continuous range of angle within the above monitoring range, then traveling on an uphill road is determined.

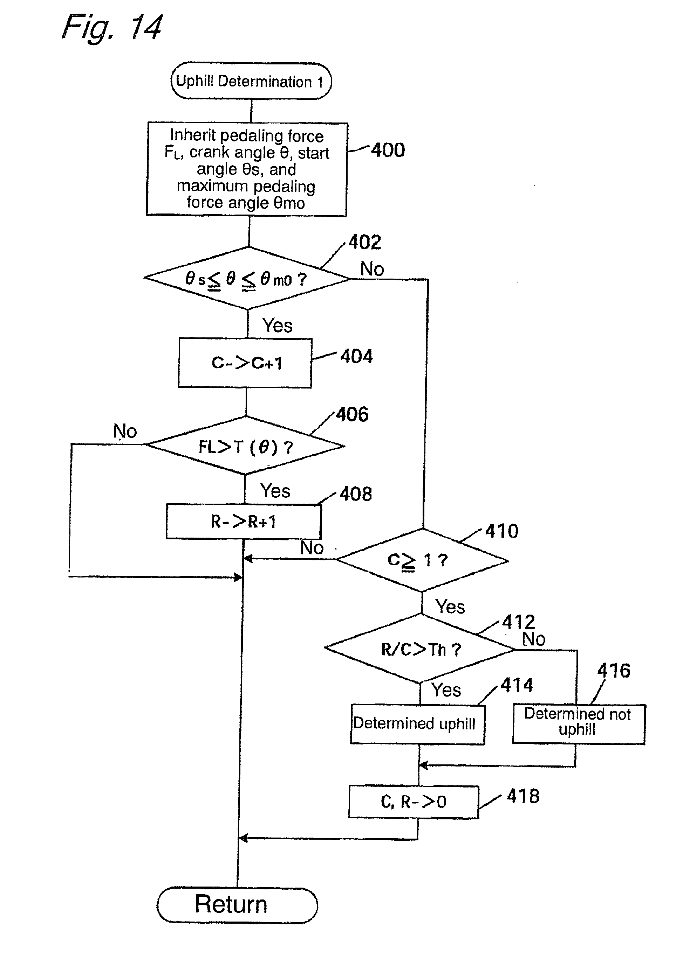

The above uphill determination manner (3) may be realized according to the flowchart in Fig. 14 for example.
In the uphill determination routine in Fig. 14, initially, a pedaling force $F_L$, a crank angle $\theta$, a pedaling start angle $\theta s$, and a maximum pedaling force angle $\theta m0$ are inherited from the main routine in Fig. 11 (step 400). Then, the determination is made whether the crank angle lies within the above monitoring range, namely, the relation of the start angle $\theta s \leq \theta \leq \theta m0$ is satisfied (step 402). If the crank angle lies within the above monitoring range (affirmative determination at step 402), a variable C is incremented by one (step 404). Incidentally, the variable C is set to 0 as a default value thereof in advance. Thereafter, the determination is made whether the pedaling force $F_L$ is above a threshold value T($\theta$) (step 406). The threshold value T($\theta$) is a function of the crank angle $\theta$ and is determined on the basis of empirical values of the pedaling force $F_L$ while traveling on an uphill road. Thus, with a pedaling force that exceeds the threshold value T($\theta$), it is considered that there is an extremely high probability that the bicycle is traveling on an uphill road. If the pedaling force $F_L$ is above the threshold value T($\theta$) (affirmative determination at step 406), a variable R is incremented by one (step 408), and returning from the uphill determination routine. Incidentally, the variable R is set to 0 as a default value thereof in advance. In this way, the variable R is incremented each time the pedaling force $F_L$ exceeds the threshold value T($\theta$) while the crank angle lies within the monitoring range.

EP 2 848 514 A1

If the crank angle θ deviates off the above monitoring range at step 402, then it is determined whether the variable C is equal to or more than 1 (step 410). If C is 0 (negative determination at step 410), it means that the determination at step 406 has not been made yet or the uphill determination in the current pedal half cycle has terminated, thus returning from this uphill determination routine. If C is equal to or more than 1 (affirmative determination at step 410), then it is determined whether the ratio of R to C, namely R/C, is equal to or more than a threshold value Th (step 412). If the R/C exceeds the threshold value Th (affirmative determination at step 412), it means that a ratio of a range where the pedaling force $F_L$ exceeds the threshold value $T(\theta)$ within the above monitoring range to the above monitoring range exceeds a constant value, thus traveling on an uphill road is determined (step 414). In contrast, if the R/C does not exceed the threshold value Th (negative determination at step 412), traveling not on an uphill road is determined (step 416). It is to be noted that 1 or 0 in an uphill flag indicates uphill or not uphill. Finally, the variables C, R are reset to 0 (step 418), then returning from the uphill determination routine.

The above uphill determination manner (4) may be realized according to the flowchart in Fig. 14 for example.

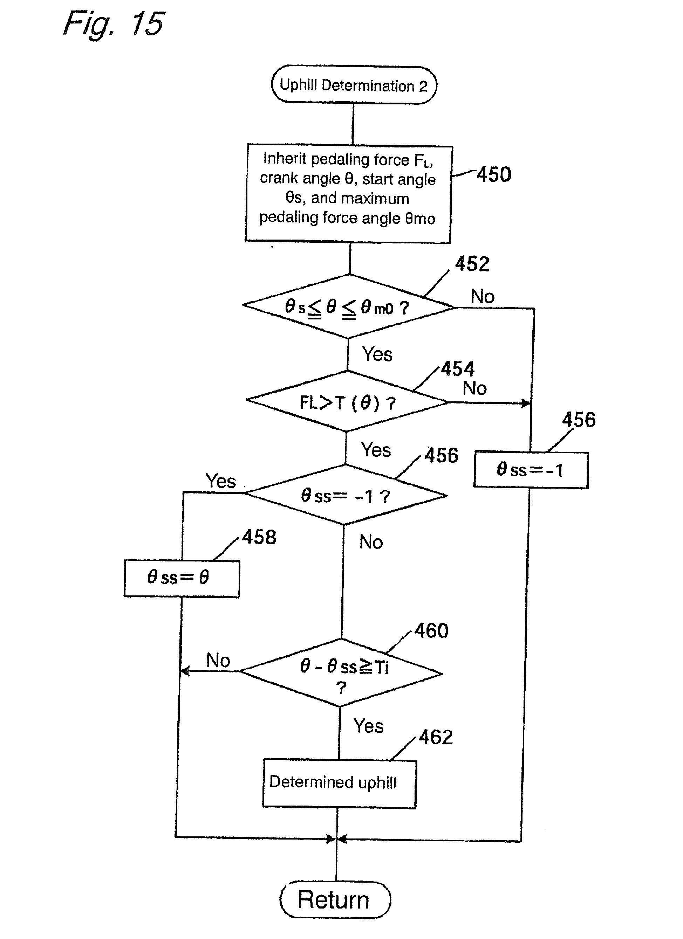

In the uphill determination routine in Fig. 15, initially, a pedaling force $F_L$, a crank angle θ, a pedaling start angle θs, and a maximum pedaling force angle θm0 are inherited from the main routine in Fig. 11 (step 450). Then, the determination is made whether the crank angle lies within the above monitoring range, namely, the relation of the start angle θs ≤ θ ≤ θm0 is satisfied (step 452). If the crank angle lies within the above monitoring range (affirmative determination at step 402), the determination is made whether the pedaling force $F_L$ is above a threshold value $T(\theta)$ (step 454). The threshold value $T(\theta)$ is like as an example shown in Fig. 14. If the pedaling force $F_L$ is above the threshold value $T(\theta)$ (affirmative determination at step 454), the determination is made whether a variable θss is -1 or not (step 456). Since θss is set to -1 in advance, the determination is initially affirmative, and thus a crank angle θ at a time when the pedaling force $F_L$ exceeds the threshold value $T(\theta)$ for the first time is substituted into θss (step 458). The crank angle cannot be a negative value. Therefore, if θss is -1, it means that θss has not been set yet.

The state continues where the pedaling force $F_L$ is above the threshold value $T(\theta)$, and this uphill determination routine 2 proceeds to the next cycle. At this time, since a value of the crank angle has been substituted into θss at step 458, it is negatively determined at step 456, and the process proceeds to step 460 while a crank angle at a time when the pedaling force $F_L$ exceeds the threshold value $T(\theta)$ for the first time is stored in θss. Supposing that a current crank angle be θ, a crank angle range in which the pedaling force $F_L$ continuously exceeds the threshold value $T(\theta)$ is denoted by (θ - θss). At step 460, the determination is made whether the crank angle range (θ - θss) becomes equal to or more than a predetermined value Ti. If a crank angle range in which the pedaling force $F_L$ continuously exceeds the threshold value $T(\theta)$ becomes equal to or more than a predetermined value Ti (affirmative determination at step 460), it means that the pedaling force $F_L$ exceeds the threshold value $T(\theta)$ continuously over a predetermined range of angle during the crank angle θ lies within the above monitoring range , and thus traveling on an uphill road is determined (step 462). An on-uphill-road state may be represented, for example, by changing an uphill flag from default value 0 to 1 indicating traveling on an uphill road. Additionally, the uphill flag is reset to zero each time when the crank angle θ enters the monitoring range in the next cycle.

In contrast, if the crank angle range is less than the predetermined value Ti (negative determination at step 460), the process returns from this subroutine. At this time, the uphill flag maintains the default value 0 indicating traveling not on an uphill road.

If the crank angle θ deviates off the above monitoring range at step 452, or if the pedaling force $F_L$ is equal to or less than the threshold value $T(\theta)$, then θss is reset to -1 (464), and returning from this uphill determination routine. Thereafter, the uphill determination processing continues.

As to the above uphill determination manners (1) to (4), each of those may be individually employed. Alternatively, some of those may be combined for use.

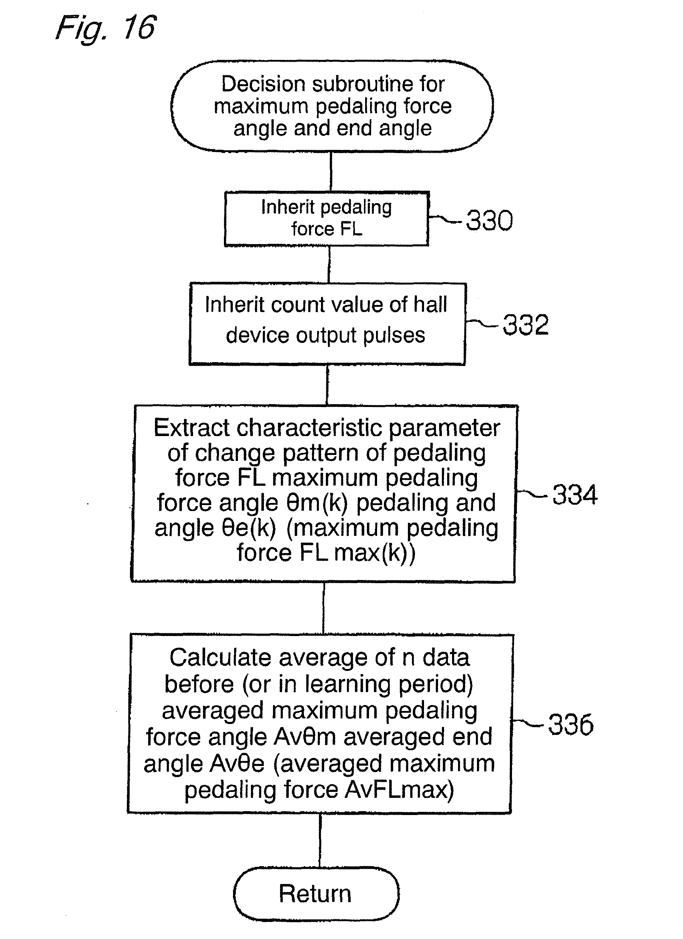

The maximum pedaling force angle θm0 and the end angle θe0 are always decided as fixed values at step 310 in Fig. 10. However, actually these values are not necessarily constant in accordance with individual difference of pedaling pattern, state of road surface, and so on. Taking it into consideration, a manner of changing the maximum pedaling force angle θm0 and the end angle θe0 according to circumstances will be explained with reference to Fig. 16. The control process shown in Fig. 16 is executed as a subroutine called at step 310 in Fig. 10.

First, as shown in Fig. 16, the pedaling force $F_L$ detected at step 300 and the count value of hall device output pulses counted at step 302 in Fig. 10 are inherited to this subroutine program (step 330, step 332). Then, at least one characteristic parameter of change pattern of the pedaling force $F_L$ is extracted every pedal half-rotation cycle (step 334). For example, a maximum pedaling force angle θm(k) and a pedaling end angle θe(k) in each of pedal half-rotation cycles k are extracted as characteristic parameters. An example of manners of extracting those parameters is specifically as follows. A pedaling end angle θe(k) may be extracted as a certain crank angle at which a crank angle has increased more than a certain value after a pedaling start angle θs is detected, and the pedaling force $F_L$ falls to cross a predetermined threshold value. A maximum pedaling force angle θm(k) may be extracted as a crank angle corresponding to the maximum pedaling force $F_L$max(k), which is retrieved while the crank angle lies between the pedaling start angle θs and the pedaling end angle θe by means of a known maximum value retrieval algorism and so on.

N data immediately before now among the data extracted at step 334 is averaged (step 336). For example, supposing that the current pedal half-rotation cycle number is p, n data of maximum pedaling force angle immediately before now is θm(p-n), θm(p-n+1), ......, θm(p-1). An averaged maximum pedaling force angle Avθm is calculated from the n data as shown in the following equation.

$$\mathrm{Av\theta m \ = \ (\theta m(p-n) \ + \ \theta m(p-n+1) \ + \ \ldots\ldots \ + \ \theta m(p-1))/n}$$

Similarly, an averaged maximum pedaling force angle Avθe is calculated from n data of pedaling end angle immediately before now, θe(p-n), θe(p-n+1), ......, θe(p-1), as shown in the following equation.

$$\mathrm{Av\theta e \ = \ (\theta e(p-n) \ + \ \theta e(p-n+1) \ + \ \ldots\ldots \ + \ \theta e(p-1))/n}$$

Further, an averaged maximum pedaling force $AvF_L max$ may be calculated from n data of maximum pedaling force immediately before now, $F_L max(p-n)$, $F_L max(p-n+1)$, ......, $F_L max(p-1)$, as shown in the following equation.

$$\mathrm{AvF_L max \ = \ (F_L max(p-n) \ + \ \ldots\ldots \ + \ F_L max(p-1))/n}$$

After the averages are calculated at step 336, the process returns from this subroutine to step 310 in Fig. 10. At this time, Avθm and Avθe obtained at step 336 are substituted into the maximum pedaling force angle θm0 and the end angle θe0, respectively, and the process proceeds to step 312. Average calculations are performed from n data before at step 336. However, it should be appreciated that Avθm and Avθe may be acquired from n data obtained during traveling for a certain learning period specified, and after the learning period, the acquired Avθm and Avθe may be used as fixed values at step 310. It is also possible that n = 1.

Some embodiments of the present invention have been described above. The present invention is, however, not limited to the above examples and may be arbitrarily and preferably modified within the scope of the gist of the present invention.

For example, the flows of the processes in Figs. 10, 11, 12, 14, 15, and 16 may be arbitrarily and preferably modified.

Also, which of the ratchet pawl side member and the ratchet tooth side portion of the one-way clutch 99 is formed on the power transmission gear 200 and the other is attached to the drive shaft may be arbitrarily and preferably changed.

Further, the type and shape of the elastic member disposed opposite to the deformation of the one-way clutch 99 may be arbitrarily and preferably modified. In place of the belleville spring, other elastic member such as a coil spring, a rubber may be used. The hall device is employed as a means for detecting a magnetic field. The means, however, is not limited to it as long as it can detect a magnetic field.

Furthermore, as to the crank angle detection means and pedaling force detection means, the position of the magnetic field detection means thereof, the shape and mount position of the magnet, and the shape and mount position of the magnetic substance and diamagnetic substance may be arbitrarily and preferably modified as long as the magnetic field pulse signal and the change of the magnetic field due to the deformation of the one-way clutch can be detected. The numbers of magnetic field detection means, magnets, and magnetic substances or diamagnetic substances are not limited to the above example, and may be arbitrarily and preferably modified.

REFERENCE SIGNS LIST

| | |
|---|---|
| 1 | electric assist bicycle |
| 2 | sprocket |
| 3 | frame |
| 4 | drive shaft |
| 11 | electric assist unit |
| 12 | chain |

| 14 | microcomputer |
|---|---|
| 15 | amplification circuit |
| 17 | battery |
| 22 | drive wheel (rear wheel) |
| 37 | electric motor |
| 37a | output axis of electric motor |
| 99 | one-way clutch |
| 100 | ratchet pawl side member |
| 102 | ratchet pawl |
| 108 | first rotation prevention grooves |
| 112 | ratchet tooth side portion |
| 114 | ratchet teeth |
| 137 | belleville spring |
| 140 | second rotation prevention grooves |
| 150 | steel ball |
| 151 | support disk |
| 161 | ring-like permanent magnet |
| 162 | hall device |
| 163 | ring member (made of magnetic substance or diamagnetic substance) |
| 164 | permanent magnet |
| 200 | assist force transmission gear |
| 202 | permanent magnet for detecting crank angle |
| 204 | teeth of power transmission gear |
| 206 | fixing pin |
| 210 | hall device for detecting crank angle |
| 220 | gear |
| 222 | assist power output shaft |

**Claims**

1. An electric assist bicycle (1) that travels by rotation of a pedal crank (6L, 6R) due to a pedaling force, comprising:

   an electric means (11, 37) configured to generate an assist force to be added to the pedaling force;
   a pedaling force detection means (99, 161, 162) configured to detect the pedaling force; and
   an assist control means (14, 15) configured to decide the assist force based on at least the pedaling force detected by the pedaling force detection means (99, 161, 162) and control the electric means (11, 37) to output the assist force;
   **characterised by** a crank angle detection means (200, 202, 210) configured to detect a crank angle, which is an angle of the pedal crank (6L, 6R) with respect to a bicycle body (3); and
   an uphill determination means (14) configured to determine whether the electric assist bicycle (1) is traveling on an uphill road on the basis of the pedaling force detected by the pedaling force detection means (99, 161, 162) and the crank angle detected by the crank angle detection means (200, 202, 210),
   wherein when the uphill determination means (14) determines that it is traveling on the uphill road, the assist control means (14, 15) switches from the assist force to an uphill assist force in accordance with at least the crank angle detected by the crank angle detection means and controls the electric means to output the uphill assist force.

2. The electric assist bicycle according to claim 1, wherein when the uphill determination means (14) determines that it is traveling on the uphill road, the assist control means (14, 15) switches from the assist force to the uphill assist force while the crank angle detected by the crank angle detection means (200, 202, 210) lies within a predetermined range.

3. The electric assist bicycle according to claim 2, wherein referring to a crank angle when a pedaling starts in a pedal half-rotation cycle as a pedaling start angle, to a crank angle when the pedaling force becomes maximum as a maximum pedaling force angle, and to a crank angle when the pedaling ends as a pedaling end angle, the predetermined range of the crank angle is a first angle that lies between the maximum pedaling force angle and the pedaling end angle in a pedal half-rotation cycle to a second angle that lies between the pedaling start angle and the maximum pedaling force angle in a next pedal half-rotation cycle.

4.  The electric assist bicycle according to claim 3, wherein the uphill assist force is decided to maintain an output value equal to or more than the assist force from the first angle to the second angle.

5.  The electric assist bicycle according to claim 4, wherein the output value of the uphill assist force is approximately constant.

6.  The electric assist bicycle according to claim 4, wherein the output value of the uphill assist force varies in accordance with at least one of the detected pedaling force, the crank angle, and a bicycle speed.

7.  The electric assist bicycle according to any one of claims 3 to 6, wherein the uphill assist force is decided so as to be connected smoothly to both the assist force at the first angle and the assist force at the second angle.

8.  The electric assist bicycle according to claim 1, wherein the uphill determination means (14) determines traveling on the uphill road when the pedaling force detected by the pedaling force detection means (99, 161, 162) while the crank angle detected by the crank angle detection means (200, 202, 210) lies within a predetermined monitoring range exceeds a predetermined value.

9.  The electric assist bicycle according to claim 8, wherein referring to a crank angle when a pedaling starts in a pedal half-rotation cycle as a pedaling start angle, to a crank angle when the pedaling force becomes maximum as a maximum pedaling force angle, and to a crank angle when the pedaling ends as a pedaling end angle, the predetermined monitoring range of the crank angle is a range defined between the pedaling start angle and the maximum pedaling force angle in a pedal half-rotation cycle.

10. The electric assist bicycle according to any one of claims 1 to 9, the crank angle detection means comprising:

    a disk (200) fixed coaxially to a sprocket (2);
    a plurality of permanent magnets (202) disposed on one surface of the disk (200) at circumferentially and equally divided positions thereof;
    a magnetic field detection means (210) disposed at a position fixed to a body frame (3), adjacent to the one surface of the disk (200); and
    a count means (14) configured to count magnetic field pulse signals from the magnetic field detection means (210),
    wherein the crank angle detection means (200, 202, 210) detects the crank angle based on a count value of the magnetic field pulse signals counted by the count means (14) from a time when the pedaling force detection means (99, 161, 162) detects a start of depressing pedals.

Fig. 1

## Fig. 2

*Fig. 3*

*Fig. 4*

(a)

(b)

(c)

Portion A      104      Portion B

*Fig. 5*

*Fig. 6*

(a)

150    108

140
4

(b)

108a

140a
4

(c)

4
140b

108b

170

*Fig. 7*

*Fig. 8*

EP 2 848 514 A1

*Fig. 9*

## Fig. 10

```
                    ┌─────────────┐
                    │    Start    │
                    └──────┬──────┘
                           │
                    ┌──────┴──────┐
                    │Detect pedaling│─── 300
                    │  force FL    │
                    └──────┬──────┘
                           │
                  ┌────────┴────────┐
                  │ Count output pulses │─── 302
                  │  from hall device   │
                  └────────┬────────┘
                           │
                  ┌────────┴────────┐
                  │ Detect bicycle speed │
                  │ from count number   │─── 304
                  │    of pulses        │
                  └────────┬────────┘
                           │
                      ◇────┴────◇
                     ╱ Depressing  ╲   306      No
                    ◇  detected     ◇──────────┐
                     ╲ from change  ╱           │
                      ╲ pedaling force ?╱       │
                       ◇────┬────◇              │
                           │ Yes                │
                  ┌────────┴────────┐           │
                  │ Set crank angle when depressing is │─── 308
                  │ detected as start angle θs        │
                  └────────┬────────┘           │
                           │                    │
                  ┌────────┴────────┐           │
                  │ Decide maximum pedaling force angle │─── 310
                  │ θmo and end angle θeo from start angle θs │
                  └────────┬────────┘           │
                           └────────────────────┘
```

## Fig. 11

```
                              ( Start )

                    Detect pedaling force F_L,
                     bicycle speed V, crank
                    angle θ, start angle θs,          350
                    maximum pedaling force
                    angle θmo, and end angle
                            θeo

                       Determine whether
                      traveling on uphill road        356
                    based on pedaling force F_L
                       and crank angle θ

                                                358
            No            Traveling on
                          uphill road?
                                          Yes

   362                              360

  Call normal assist          Call uphill assist
  control subroutine          control subroutine
```

## Fig. 12

Uphill assist control

Inherit pedaling force $F_L$, bicycle speed V, crank angle θ, start angle θs, and end angle θeo ⎯370

371

$\theta 1 \leqq \theta \leqq \theta 2$ ?

No

Yes

Read uphill assist force data TAf (V, θ) ⎯372

374

No

Equal to or longer than constant time? FL<Fmin?

Yes

378

Call normal assist control subroutine

Perform motor control for outputting uphill assist force TAf ⎯376

Return

Fig. 13

*Fig. 14*

```
        ( Uphill Determination 1 )
                    |
    ┌───────────────────────────┐
    │  Inherit pedaling force   │
    │  FL, crank angle θ, start  │ ─── 400
    │     angle θs, and          │
    │  maximum pedaling          │
    │   force angle θmo          │
    └───────────────────────────┘
                    |
                                402
                   ◇──────── No ──────┐
              θs ≦ θ ≦ θmo ?           │
                   ◇                   │
                    | Yes             │
            ┌───────────────┐          │
            │   C->C+1      │ ── 404   │
            └───────────────┘          │
                    |                  │
                         406           │
                   ◇────────           │
      No ──── FL>T (θ) ?               │
       │           ◇                   │
       │            | Yes   408        │
       │     ┌───────────────┐         │
       │     │   R->R+1      │         │
       │     └───────────────┘         │
       │            |     No   410     │
       │            ◇───────────◇      │
       │            |      C ≧ 1 ?     │
       │            |        ◇─────────┘
       │            |         | Yes
       │            |              412
       │            |         ◇─────────── No ──┐
       │            |      R/C>Th ?             │
       │            |         ◇                 │
       │            |          | Yes   414      │  416
       │            |   ┌──────────────┐  ┌──────────────┐
       │            |   │ Determined   │  │ Determined not│
       │            |   │   uphill     │  │   uphill      │
       │            |   └──────────────┘  └──────────────┘
       │            |          |                 |
       │            |          └────────◀────────┘
       │            |                  |
       │            |          ┌──────────────┐
       │            |          │  C, R->0     │ ── 418
       │            |          └──────────────┘
       │            |                  |
       └────────────┴─────────◀────────┘
                    |
              ( Return )
```

*Fig. 15*

```
                    ( Uphill Determination 2 )
                              │
                    ┌─────────────────────┐
                    │ Inherit pedaling force FL,
                    │ crank angle θ, start angle      ─ 450
                    │ θs, and maximum
                    │ pedaling force angle θmo
                    └─────────────────────┘
                              │
                                          452
                         ◇ θs ≦ θ ≦ θmo ? ◇──── No ──────┐
                              │                           │
                             Yes                          │
                                       454                │
                          ◇ FL > T(θ) ? ◇──── No ───────┐ │
                              │                          │ │
                             Yes   456                   │ │         456
                   Yes                                   │ │    ┌──────────┐
              ┌─────◇ θss = -1 ? ◇                       │ │    │ θss = -1 │
              │         │                                │ │    └──────────┘
         458  │        No                                │ │          │
    ┌──────┐  │                                          │ │          │
    │ θss=θ │ │                                          │ │          │
    └──────┘  │          460                             │ │          │
              │    ◇ θ - θss ≧ Ti ◇                      │ │          │
         No   │    ◇       ?      ◇──── No ──────────────┘ │          │
    ◄─────────┤         │                                  │          │
              │        Yes   462                           │          │
              │    ┌──────────────┐                        │          │
              │    │ Determined uphill │                   │          │
              │    └──────────────┘                        │          │
              │         │                                  │          │
              └─────────┴──────────────────────────────────┴──────────┘
                              │
                         ( Return )
```

*Fig. 16*

```
┌─────────────────────────┐
│  Decision subroutine for │
│  maximum pedaling force  │
│  angle and end angle     │
└─────────────────────────┘
            │
            │
┌─────────────────────┐
│   Inherit pedaling  │──── 330
│     force FL        │
└─────────────────────┘
            │
            │
┌──────────────────────────┐
│  Inherit count value of hall │──── 332
│   device output pulses   │
└──────────────────────────┘
            │
            │
┌────────────────────────────────┐
│  Extract characteristic parameter │
│  of change pattern of pedaling    │
│  force FL maximum pedaling        │
│  force angle θm(k) pedaling and   │──── 334
│  angle θe(k) (maximum pedaling    │
│  force FL max(k))                 │
└────────────────────────────────┘
            │
            │
┌────────────────────────────────┐
│  Calculate average of n data      │
│  before (or in learning period)   │
│  averaged maximum pedaling        │
│  force angle Avθm averaged end    │──── 336
│  angle Avθe (averaged maximum     │
│  pedaling force AvFLmax)          │
└────────────────────────────────┘
            │
            │
       ┌─────────┐
       │  Return │
       └─────────┘
```

*Fig. 17*

Force

Time

260 262 263 261 264 265

Inertia is equal to or less than zero

**EP 2 848 514 A1**

Europäisches
Patentamt
European
Patent Office
Office européen
des brevets

# EUROPEAN SEARCH REPORT

Application Number

EP 14 18 4733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 102 43 751 A1 (HONDA MOTOR CO LTD [JP]) 5 June 2003 (2003-06-05) * paragraphs [0050], [0055], [0056], [0064], [0066]; figures 1,2,7,11 * | 1-10 | INV. B62M6/50 B60L11/007 |
| X,D | US 2004/206563 A1 (MURATA KAZUHIRO [JP]) 21 October 2004 (2004-10-21) * figure 1 * | 1-10 | |
| A | EP 0 569 954 A1 (YAMAHA MOTOR CO LTD [JP]) 18 November 1993 (1993-11-18) * figure 2 * | 1-10 | |

TECHNICAL FIELDS
SEARCHED      (IPC)

B62M
B60L

The present search report has been drawn up for all claims

| Place of search | Date of completion of the search | Examiner |
|---|---|---|
| The Hague | 19 December 2014 | Booij, Nico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

32

**ANNEX TO THE EUROPEAN SEARCH REPORT
ON EUROPEAN PATENT APPLICATION NO.**                    EP 14 18 4733

This annex lists the patent family members relating to the patent documents cited in  the above-mentioned European search report.
The members are as contained in the European Patent Office EDP file on
The European Patent Office is in no way liable for these particulars which are merely given for the purpose of information.

19-12-2014

| Patent document cited in search report | | | Publication date | Patent family member(s) | | | Publication date |
|---|---|---|---|---|---|---|---|
| DE 10243751 | A1 | | 05-06-2003 | CN | 1410318 | A | 16-04-2003 |
| | | | | DE | 10243751 | A1 | 05-06-2003 |
| | | | | JP | 2003104274 | A | 09-04-2003 |
| | | | | NL | 1021277 | A1 | 31-03-2003 |
| | | | | NL | 1021277 | C2 | 13-06-2003 |
| US 2004206563 | A1 | | 21-10-2004 | JP | 2004314753 | A | 11-11-2004 |
| | | | | US | 2004206563 | A1 | 21-10-2004 |
| EP 0569954 | A1 | | 18-11-1993 | DE | 69329586 | D1 | 30-11-2000 |
| | | | | DE | 69329586 | T2 | 15-03-2001 |
| | | | | EP | 0569954 | A1 | 18-11-1993 |
| | | | | US | 5370200 | A | 06-12-1994 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI8113185 B
- JP 3389351 B
- US 20040206563 A